# EUROPÄISCHE PATENTSCHRIFT

(11) **EP 2 686 086 B1**
(45) Veröffentlichungstag und Bekanntmachung des Hinweises auf die Patenterteilung: **19.06.2019**
(21) Anmeldenummer: 12706502.7
(22) Anmeldetag: 13.02.2012
(51) Int. Cl.: B01D 53/04, B01D 53/08

(54) **VERFAHREN ZUR ADSORPTION VON GERUCHSEMISSIONEN AUS DER KAUTSCHUKVERARBEITUNG**
PROCESS FOR ADSORPTION OF ODOR EMISSIONS FROM RUBBER PROCESSING
PROCÉDÉ DESTINÉ À ADSORBER DES ÉMISSIONS ODORANTES ISSUES DE LA TRANSFORMATION DU CAOUTCHOUC

(30) Priorität: 16.03.2011 DE 102011001298
(43) Veröffentlichungstag der Anmeldung: 22.01.2014
(73) Patentinhaber: Continental Reifen Deutschland GmbH, 30165 Hannover (DE)
(72) Erfinder: RECKER, Carla, 30167 Hannover (DE); THEUSNER, Martin, 30989 Gehrden (DE)
(74) Vertreter: Widjaja, Wira
(86) Internationale Anmeldenummer: PCT/EP2012/052373
(87) Internationale Veröffentlichungsnummer: WO 2012/123200

(56) Entgegenhaltungen:
- WO-A1-2011/101059
- DE-C- 969 431
- DATABASE WPI Week 201004 Thomson Scientific, London, GB; AN 2009-L57206 XP002677469, -& KR 2009 0068948 A (HANKOOK TIRE MFG CO LTD) 29. Juni 2009 (2009-06-29)
- DATABASE WPI Week 200864 Thomson Scientific, London, GB; AN 2008-K83117 XP002677468, -& KR 100 736 248 B1 (HANKOOK TIRE MFG CO LTD) 6. Juli 2007 (2007-07-06)
- DATABASE WPI Week 200864 Thomson Scientific, London, GB; AN 2008-K83117 & KR 100 736 248 B1 (HANKOOK TIRE MFG CO LTD) 6 July 2007 (2007-07-06)

## Beschreibung

Die Erfindung betrifft ein Verfahren zur Adsorption von Geruchsemissionen aus der Kautschukverarbeitung.

In der kautschukverarbeitenden Industrie entstehen sowohl bei der Vulkanisation in Vulkanisationsformen, bei verschiedenen Weiterverarbeitungsprozessen (z. B. Extrusion, Kalandrierung, usw.) als auch bei der Mischungsherstellung in Mischaggregaten Aerosole, Stäube und Geruchsemissionen, die sich z. B. in Form von blauen Dämpfen zeigen. Die Aerosole entstehen aus Inhaltsstoffen der Mischungsrezepturen (z. B. Kautschuke, Alterungsschutzmittel, Öle, Beschleuniger, usw.), die sich bei diesen Temperaturen entweder unzersetzt, als Reaktionsprodukte oder als Bruchstücke in die Atmosphäre verflüchtigen. In der Reifenindustrie beispielsweise handelt es sich bei den entweichenden Verbindungen um Mischungsinhaltsstoffe bzw. deren Spalt- und/oder Reaktionsprodukte, die auch in der gesamten Mischungsmatrix des Reifens vorhanden sind.

Werden die Emissionen abgesaugt, kondensieren diese an den Innenwänden der Abluftrohre und führen zu einer mit der Zeit starken Verunreinigung der Abluftrohre und ein Großteil der Emissionen gelangt in die Umwelt. Das Kondensat kann aus Rohrverbindungen und Revisionsklappen als schwarze hochviskose und klebrige Masse heraustreten. Eine Reinigung der Abluftrohre ist häufig nur mit großem technischem Aufwand möglich. Werden die Abgasströme filtriert, wird einerseits die Menge an Emissionen in die Umwelt reduziert, weiter entfällt die aufwändige Reinigung der Abluftanlagen. Als ein weiterer Vorteil ergibt sich die Möglichkeit der Anordnung von Wärmetauscheraggregaten im Abluftstrom nach der Filtereinheit zur Rückgewinnung enthaltener Wärmeenergie.

Insbesondere bei der Absaugung aus Mischaggregaten zur Mischungsherstellung ist die Abluft mit Stäuben beladen. Diese dürfen ebenfalls nicht ohne weiteres in die Umgebungsluft abgegeben werden.

In der DE 969431 C, KR 20090068948 A, KR 100736248 B1 und WO 20011101059 A1 sind bekannte Verfahren zur Emissionsbehandlung bei der Herstellung von Kautschukprodukten offenbart.

Der Erfindung lag die Aufgabe zugrunde, ein Verfahren bereitzustellen, mit dem Geruchsemissionen, Aerosole und Stäube aus der Abluft effektiv getrennt werden.

Gelöst wird die Aufgabe durch ein Verfahren nach Anspruch 1.

Ein Vorteil der Erfindung ist insbesondere darin zu sehen, dass durch das erfindungsgemäße Verfahren das Reinigen der Abluft mit Geruchsemissionen, Aerosolen und Stäuben hochwirksam in der Absauganlage erfolgt, wodurch die Emissionen nicht ungefiltert in die Umwelt gelangen. Dadurch werden entsprechende Geruchsemissionen, die ggf. in der Nähe von kautschukverarbeitenden Betrieben wie beispielsweise Reifenfabriken auftreten, effektiv unterbunden.

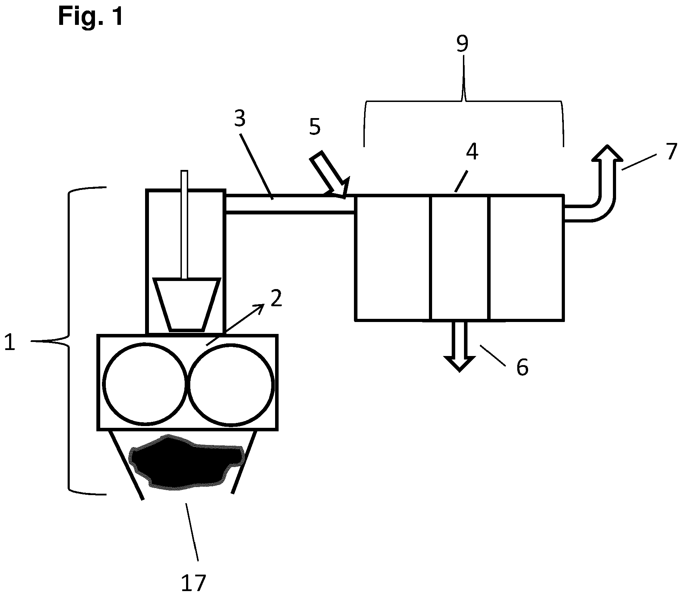

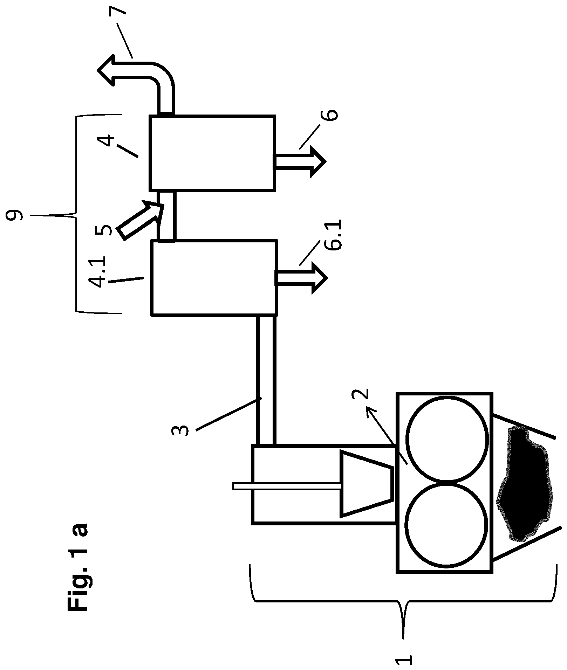

Insbesondere für die Behandlung staubreicher Abluft, wie sie beispielsweise an Mischaggregaten auftritt, ist vorgesehen, dass die Filteranlage einstufig ausgebildet ist, wobei das Adsorbens vor Schritt b) zusammen mit den Stäuben der Absauganlage zugeführt wird und das Adsorbens mit den Stäuben am Filtermittel in Form eines Staubabscheiders von der Abluft getrennt wird. Ein entsprechendes Ausführungsbeispiel für die Anordnung des Filteraggregates an einem Mischaggregat ist in der Fig. 1 gezeigt. Das Adsorbens wird zusammen mit den Stäuben und den Geruchsemissionen und/oder Aerosolen der Absauganlage zugeführt. Dadurch werden die Geruchsemissionen und/oder Aerosole sowie die Stäube effektiv aus der Abluft entfernt.

Es ist vorgesehen, dass das Adsorbens und die Stäube in einem Mengenverhältnis von 100 zu 1 bis 1 zu 100 in den Staubabscheider eingeblasen werden. Diese Mengenverhältnisse lassen sich einfach realisieren. Außerdem werden bei diesen Mengenverhältnissen die auftretenden Geruchsemissionen, Aerosole und/oder Stäube effektiv aus der Abluft getrennt.

In einer weiteren nicht erfindungsgemässen Ausführung ist vorgesehen, dass die Filteranlage mehrstufig ausgebildet ist, wobei die Stäube in einer ersten Stufe mit einem Staubabscheider aus der Abluft getrennt und in einer zweiten Stufe die Geruchsemissionen und/oder Aerosole mit dem Adsorbens aus der Abluft entfernt werden. Mit dem zweistufigen Verfahren lassen sich die Geruchsemissionen und/oder Aerosole noch effektiver aus der Abluft entfernen.

In einer weiteren nicht erfindungsgemässen Ausführung ist vorgesehen, dass die Filteranlage einen Wanderbettfilter mit einem Adsorbens als Filterbett umfasst. Der Wanderbettfilter hat den Vorteil, dass das Adsorbens kontinuierlich durch die Filteranlage geführt wird. Desweiteren wird ein Verkleben des Filterbettes an der Einströmöffnung der Geruchsemissionen, Aerosole und/oder Stäube wirksam verhindert, da durch die absatzweise oder kontinuierliche Bewegung des Filterbettes eine ständige Erneuerung des Materials im Einströmbereich erfolgt. Zusätzlich erfolgt eine effektivere Nutzung und gleichmäßigere Beladung des Adsorbens.

In einer weiteren nicht erfindungsgemässen Ausführung ist vorgesehen, dass der Wanderbettfilter eine gegenläufige Strömungsrichtung von Filterbett und Abluft aufweist. Durch die gegenläufige Strömungsrichtung werden die Geruchsemissionen hochwirksam aus der Abluft entfernt.

In einer weiteren nicht erfindungsgemässen Ausführung ist vorgesehen, dass der Wanderbettfilter eine rechtwinklige Anströmung des Filterbettes mit der Abluft aufweist, wobei das Filterbett mit dem Adsorbens kontinuierlich vertikal von oben nach unten geführt wird. Auf diese Weise wird der Druckverlust in der Abluftströmung relativ gering gehalten. Dadurch wird die Abluft hochwirksam gereinigt.

In einer weiteren nicht erfindungsgemässen Ausführung ist vorgesehen, dass die Filteranlage einen Festbettfilter mit einem Adsorbens als Filterbett umfasst, wobei die Abluft in horizontaler oder vertikaler Richtung durch den Festbettfilter geführt wird. Eine solche Anordnung des Festbettfilters lässt sich relativ einfach in der Absauganlage realisieren. Das Festbett kann auch als Wanderbett ausgeführt sein.

In einer weiteren nicht erfindungsgemässen Ausführung ist vorgesehen, dass der Festbettfilter ein Mehrschicht- Festbettfilter ist, der mindestens zwei Adsorbensschichten, die gleich oder verschieden sein können, aufweist. Der Mehrschicht-Festbettfilter ermöglicht eine bessere Reinigung der Abluft. Die Festbettfilter können auch als Wanderbettfilter ausgeführt sein.

In einer weiteren nicht erfindungsgemässen Ausführung ist vorgesehen, dass die Filteranlage einen Festbett-Multifilter aufweist. Die einzelnen Filterelemente können gleiches oder verschiedenes Adsorbens beinhalten. Durch den Festbett-Multifilter wird die Abluft hochwirksam von den Geruchsemissionen gereinigt. Die einzelnen Festbettfilter können auch als Wanderbettfilter ausgeführt sein.

In einer weiteren vorteilhaften Weiterbildung der Erfindung ist vorgesehen, dass das Adsorbens Kieselsäure (Siliciumdioxid), organisch modifizierte Kieselsäure, Zinkoxid, Talkum, Silica, Aktivkohle, Hochofenkoks (ggf. gemahlen) und/oder unterschiedliche Rußtypen umfasst. Mit diesen Stoffen lassen sich die Geruchsemissionen besonders gut adsorbieren.

In einer weiteren vorteilhaften Weiterbildung der Erfindung ist vorgesehen, dass das Adsorbens in einem pulverförmigen, geperlten und/oder granulierten Zustand in der Filteranlage angeordnet wird. Das Adsorbens lässt sich in diesem Zustand besonders vorteilhaft in die Absauganlage einbringen.

In einer weiteren vorteilhaften Weiterbildung der Erfindung ist vorgesehen, dass die Filteranlage einen Mehrkammerfilter mit einzelnen Filtertaschen und/oder Filterplatten und/oder Filterlamellen und/oder Faltenfilter und/oder Schlauchfilter aufweist. Mit den Mehrkammerfiltern lassen sich die Stäube und Geruchsemissionen wirksam aus der Abluft entfernen.

Es können Filterapparate alternativer Ausführungsformen verwendet werden.

An einem Ausführungsbeispiel soll die Erfindung nachfolgend erläutert werden. Es zeigen:
- Fig. 1: eine schematische Darstellung des Verfahrens,
- Fig. 2: eine schematische Darstellung einer nicht erfindungsgemässen Ausführung des Verfahrens in einer Schnittansicht,
- Fig. 3 - 10: unterschiedliche Ausführungen nicht erfindungsgemässer Ausführung Filterkonstruktionen.

Die Fig. 1 zeigt eine schematische Darstellung des erfindungsgemäßen Verfahrens am Beispiel der Anordnung in Kombination mit einem Mischaggregat.

In dem schematisch dargestellten Mischer 1 werden Kautschukmischungen hergestellt. Bei diesem Prozess werden u. a. Stäube, Aerosole und/oder Geruchsemissionen 2 freigesetzt, die in die Umgebungsluft des Mischers emittieren. Die beladene Abluft 3 wird der Absauganlage 9 zugeführt.

Die beladene Abluft 3 mit den Stäuben, Aerosolen und/oder Geruchsemissionen, die von der Mischungsherstellung stammen, werden zusammen mit dem Adsorbens 5 in die Absauganlage 9 eingeblasen. Die Filteranlage 4 ist beispielsweise ein Staubabscheider, mit dem der Staub, die Geruchsemissionen und/oder Aerosole und das eingeblasene Adsorbens aus der Abluft getrennt wird. Die gereinigte Luft 7 tritt hinter der Absauganlage 9 wieder aus. Nach einer entsprechenden Trennung erfolgt ein Abführen 6 des beladenen Filteradsorbens aus der Filteranlage 4. Das Abführen 6 des beladenen Filteradsorbens mit den entsprechenden gefilterten Stäuben erfolgt beispielsweise durch ein Abrüttelverfahren.

Die Fig. la zeigt eine schematische Darstellung einer nicht erfindungsgemässen Ausführung des Verfahrens am Beispiel der Anordnung in Kombination mit einem Mischaggregat mit getrennter Abscheidung von enthaltenen Stäuben.

In dem schematisch dargestellten Mischer 1 werden Kautschukmischungen hergestellt. Bei diesem Prozess werden u. a. Stäube, Aerosole und/oder Geruchsemissionen 2 freigesetzt, die in die Umgebungsluft des Mischers emittieren. Die beladene Abluft 3 wird der Absauganlage 9 zugeführt.

Die beladene Abluft 3 mit den Stäuben, Aerosolen und/oder Geruchsemissionen, die von der Mischungsherstellung stammen, werden zunächst in einen Staubabscheider 4.1 geführt, in dem die enthaltenen Stäube abgeschieden werden. Die staubfreie Abluft wird anschließend in die Filteranlage 4, die beispielsweise als Festbettfilter oder Wanderbettfilter ausgeführt sein kann, eingeblasen, um die Geruchsemissionen und/oder Aerosole durch Adsorption auf dem Adsorbens aus der Abluft zu trennen. Die gereinigte Luft 7 tritt hinter der Absauganlage 9 wieder aus. Nach einer entsprechenden Trennung erfolgt ein Abführen 6 des beladenen Filteradsorbens aus der Filteranlage 4. Das Abführen 6.1 des abgeschiedenen Staubes aus dem Staubabscheider 4.1 erfolgt beispielsweise durch ein Abrüttelverfahren. Die abgeschiedenen Stäube können so einer separaten Verwertung zugeführt werden.

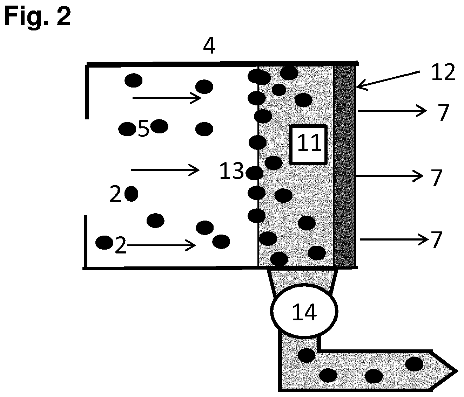

Die Fig. 2 zeigt eine schematische Darstellung des Verfahrens, bei der insbesondere der Prozess der Filteranlage 4 dargestellt ist. Die Figur zeigt im Wesentlichen eine Schnittansicht durch die Filteranlage 4 mit dem Filtermittel 12 und dem darauf angeordneten Filterkuchen 11 mit Adsorbens und Stäuben. Unterhalb der Filteranlage 4 ist ein Förderwerkzeug 14 angeordnet, welches den beladenen Filterkuchen bzw. Filteradsorbens herausfördert. Die gereinigte Luft 7 tritt hinter dem Filtermittel 12 aus. Die Stäube 2 und die Geruchsemission und/oder Aerosole der Verarbeitungseinheit werden zusammen mit dem Adsorbens 5 in die Filteranlage 4 eingeblasen. Das Filtermittel 12 ist beispielsweise ein Staubabscheider. Dieser Staubabscheider kann in Form eines sogenannten Mehrkammerfilters ausgebildet sein. Vor dem Filtermittel 12 bildet sich ein sogenannter Filterkuchen 11, der aus einem Gemisch aus gefilterten Stäuben und beladenen Adsorbens besteht. Das beladene Adsorbens hat unter anderem die Geruchsemissionen und/oder Aerosole aus der Abluft entfernt.
Mit dem Förderwerkzeug 14 erfolgt das Abführen 6 des beladenen Filteradsorbens mit den gefilterten Stäuben.

Durch Messung des Strömungswiderstandes oder des Druckaufbaues im Filtermittel 12 wird die Filterbelegung ermittelt. Ist der Luftdurchsatz nicht mehr ausreichend, wird das Filtermittel 12 abgereinigt. Dieses geschieht durch Abrütteln oder durch Pressluftstöße von der Außenseite gegen die Filterflächen des Filtermittels 12. Der beladene Filterkuchen 11 löst sich von den Filterwänden, fällt herab und wird durch geeignete Verfahren, z. B. mit dem Förderwerkzeug 14, aus der Filteranlage herausgefördert.

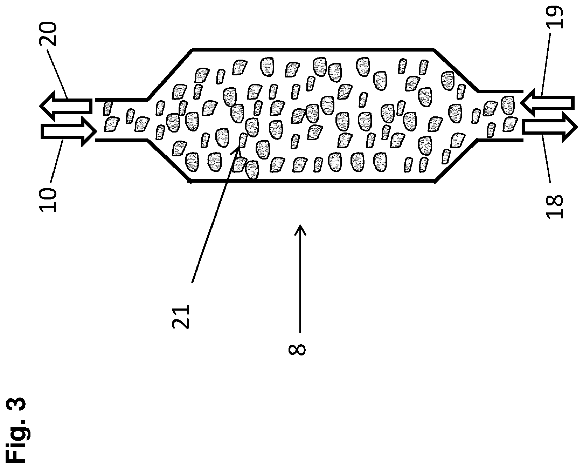

Fig. 3 zeigt den Einsatz eines Wanderbettfilters mit einer gegenläufigen Strömungsrichtung. Das Adsorbens 21 wird kontinuierlich in vertikaler Richtung von oben nach unten durch den Wanderbettfilter hindurchgeführt. Das Adsorbens wird am Adsorbereintritt 10 in den Wanderbettfilter gegeben und tritt nach einiger Zeit am Adsorbensaustritt 18 wieder aus. Die Abluft wird gegenläufig geführt. Der Ablufteintritt 10 befindet sich unten und der Abluftaustritt 20 befindet sich oben am Wanderbettfilter 8. Der Wanderbettfilter 8 wird vorzugsweise bei dem zweistufigen Filterverfahren oder bei der Reinigung staubarmer Abluftströme eingesetzt. In dem zweistufigen Verfahren erfolgt in einer ersten Stufe die Staubabtrennung aus der Abluft, beispielsweise mit einem Staubabscheider. Die aus dem Staubabscheider abgeführte Abluft wird anschließend in einer zweiten Stufe dem Wanderbettfilter zugeführt. In diesem Wanderbettfilter werden mit dem Adsorbens 8 die entsprechenden Geruchsemissionen und/oder Aerosole aus der Abluft entfernt.

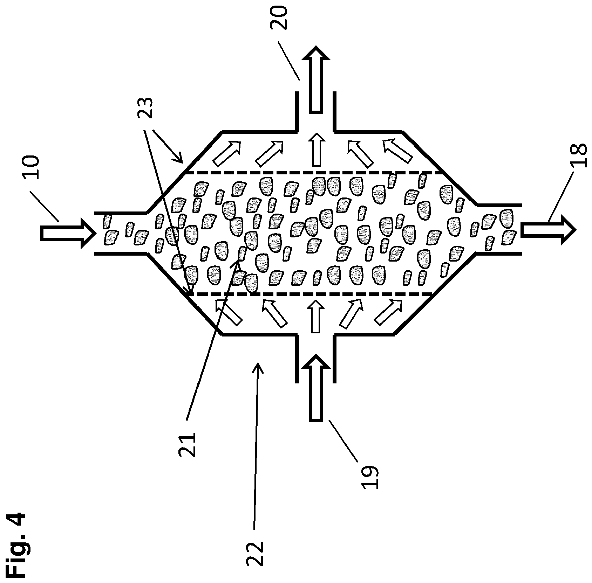

Fig. 4 zeigt den Wanderbettfilter mit einer rechtwinkligen Anströmung des Filterbettes. Über den Adsorbenseintritt 10 wird das Adsorbens 21 zugeführt. Am Adsorbensaustritt 18 wird das beladene Adsorbens wieder abgeführt. Die Abluft wird am Ablufteintritt dem Wanderbettfilter 22 zugeführt. Auf der gegenüberliegenden Seite befindet sich der Abluftaustritt 20. Das Adsorbens 21 wird auf beiden Seiten durch entsprechende Siebplatten 23 gehalten. Der dargestellte Wanderbettfilter und die nachfolgenden Festbettfilter werden vorzugsweise für das zweistufige Verfahren eingesetzt, bei dem die Abluft vorab mit einem Staubabscheider entsprechend gereinigt worden ist oder zur Reiniung staubarmer Abluftströme.

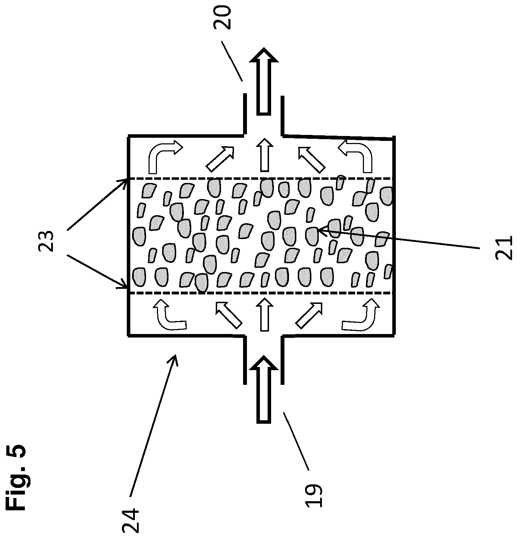

Fig. 5 zeigt den Festbettfilter 24 mit Abluftführung in horizontaler Richtung. Die Abluft wird über den Ablufteintritt dem Festbettfilter 24 zugeführt. Das Adsorbens 21 wird seitlich durch zwei Siebplatten 23 gehalten. Die gereinigte Abluft tritt am Abluftfilter 20 aus dem Festbettfilter 24 aus.

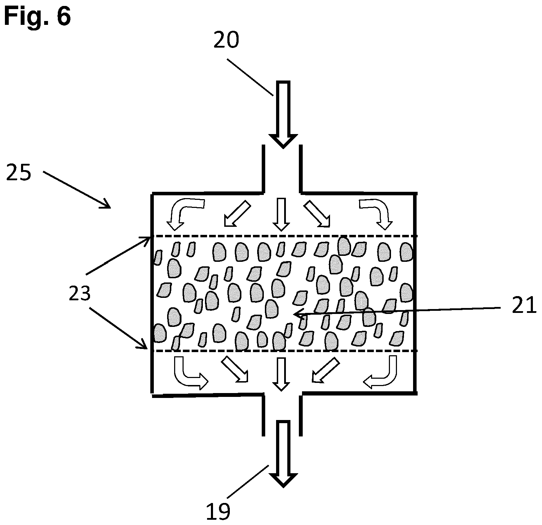

Fig. 6 zeigt den Festbettfilter 25 mit Abluftführung in vertikaler Richtung. Im Gegensatz zu dem Ausführungsbeispiel in Fig. 5 wird die Abluft in vertikaler Richtung von unten nach oben geführt.

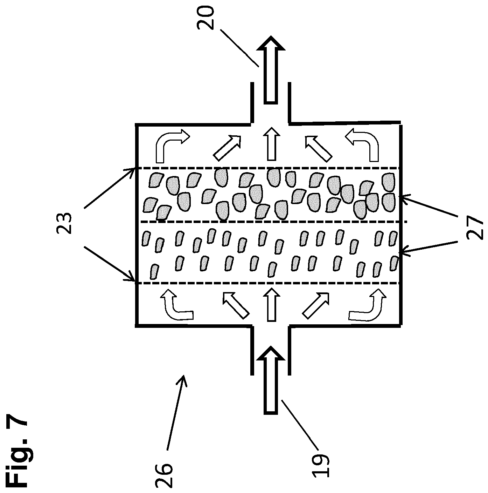

Fig. 7 zeigt den Mehrschicht-Festbettfilter 26 mit Abluftführung in horizontaler Richtung. Bei diesem Ausführungsbeispiel sind zwei Adsorptionsschichten 27 vorgesehen, die durch entsprechende Siebplatten 23 gehalten werden.

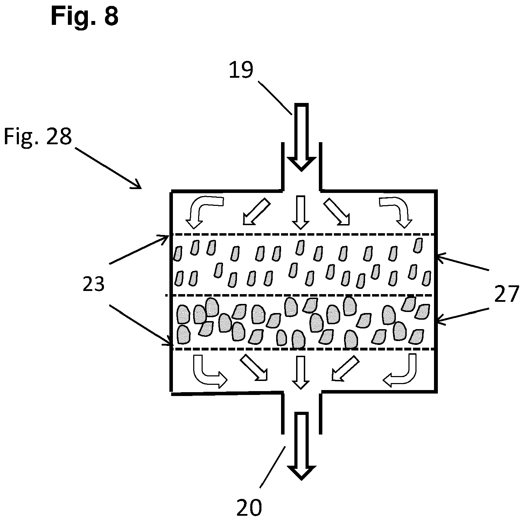

Fig. 8 zeigt einen Mehrschicht-Festbettfilter mit Abluftführung in vertikaler Richtung. Die beiden Adsorptionsschichten 27, die sich in ihrer Partikelgröße unterscheiden, werden durch Siebplatten 23 gehalten. Die Abluft wird von oben am Ablufteintritt 19 dem Mehrschicht-Festbettfilter zugeführt.

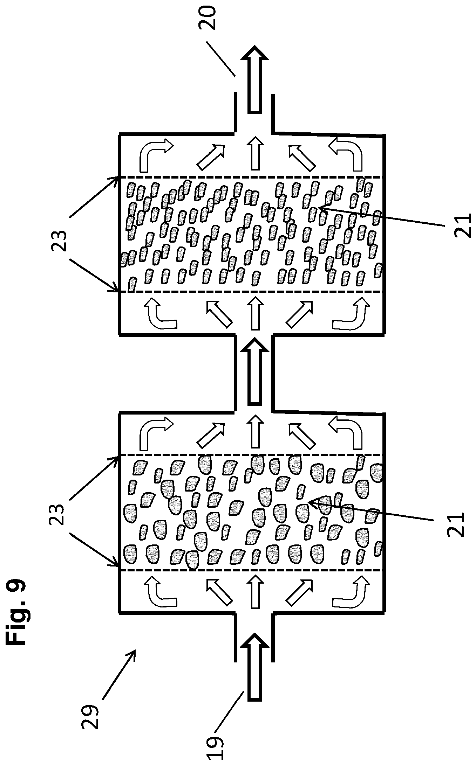

Fig. 9 zeigt einen Festbett-Multifilter , hier beispielhaft als Doppelfilter 29 ausgeführt. Bei diesem Doppelfilter sind zwei Festbettfilter hintereinander in Reihe angeordnet. Das Adsorbens 21 wird wiederum durch seitlich angeordnete Siebplatten 23 gehalten. Die gereinigte Luft tritt am Abluftaustritt 20 aus dem Doppelfilter aus.

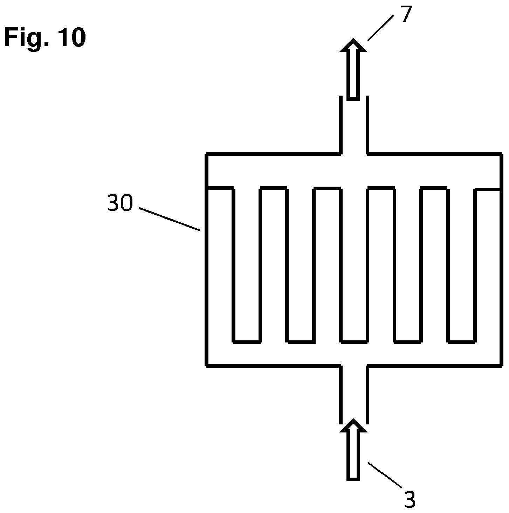

Fig. 10 zeigt den Mehrkammerfilter 30 mit einzelnen Filtertaschen. Die Filtertaschen haben den Vorteil, dass sie bei einem geringen Bauraum eine große Filteroberfläche abbilden. Dadurch können Stäube und andere Emissionen effektiv aus der Abluft entfernt werden.

**Bezugszeichenliste**

| | | | |
|---|---|---|---|
| 1 | Mischer für Herstellung einer Kautschukmischung | | |
| 2 | Stäube, Aerosole und/oder Geruchsemissionen des Mischers | | |
| 3 | Beladende Abluft | | |
| 4 | Filteranlage, | 4.1 | Staubfilter |
| 5 | Zuführung von Adsorbens | | |
| 6 | Abführen des beladenen Filteradsorbens, | 6.1 | Abführen des abfiltrierten Staubes |
| 7 | Gereinigte Luft | | |
| 8 | Wanderbettfilter mit gegenläufiger Strömungsrichtung | | |
| 9 | Absauganlage | | |
| 10 | Adsorbenseintritt | | |
| 11 | Gemisch-Schicht aus Adsorbens und Stäuben | | |
| 12 | Filtermittel | | |
| 13 | Beladener Adsorbens mit Geruchsemission | | |
| 14 | Förderwerkzeug | | |
| 18 | Adsorbensaustritt | | |
| 19 | Ablufteintritt | | |
| 20 | Abluftaustritt | | |
| 21 | Adsorbens | | |
| 22 | Wanderbettfilter mit rechtwinkliger Anströmung des Filterbettes | | |
| 23 | Siebplatten | | |
| 24 | Festbettfilter mit Abluft-Führung in horizontaler Richtung | | |
| 25 | Festbettfilter mit Abluft-Führung in vertikaler Richtung | | |
| 26 | Mehrschicht-Festbettfilter mit Abluft-Führung in horizontaler Richtung | | |
| 27 | Adsorptionsschichten | | |
| 28 | Mehrschicht-Festbettfilter mit Abluft-Führung in vertikaler Richtung | | |
| 29 | Festbett-Doppelfilter | | |
| 30 | Mehrkammerfilter mit einzelnen Filtertaschen | | |

## Patentansprüche

1. Verfahren zur Adsorption von Geruchsemissionen bei der Herstellung von Kautschukmischungen mit einem Mischer mit folgenden Schritten:
a) Absaugen von Geruchsemissionen, Aerosolen und Stäuben (2) mit einer Absauganlage (9), wobei die Geruchsemissionen, Aerosole und Stäube (2) bei der Kautschukverarbeitung anfallen,
b)Adsorption der Geruchsemissionen mit einer in der Absauganlage (9) angeordneten Filteranlage (4),
wobei die Filteranlage (4) ein Adsorbens (5) für Geruchsemissionen und/oder Aerosole und ein Filtermittel (12) für das Separieren von Stäuben und das Zurückhalten des Adsorbens umfasst,
wobei das Adsorbens (5) die Geruchsemissionen und/oder Aerosole hochwirksam aus der Abluft entfernt und für die Mischungsherstellung einsetzbar ist,
wobei die Filteranlage (4) einstufig ausgebildet ist,
wobei das Adsorbens (5) vor Schritt b) zusammen mit den Stäuben der Absauganlage (9) zugeführt wird und das beladene Adsorbens (13) mit den Stäuben am Filtermittel (12) in Form eines Staubabscheiders von der Abluft getrennt wird, wobei das Adsorbens (5) und die Stäube in einem Mengenverhältnis von 100 zu 1 bis 1 zu 100 in den Staubabscheider eingeblassen wird,
c) Abführen von sauberer, geruchsfreier Luft (7) mit einem Fördermittel aus der Absauganlage (9),
d)Abführen des beladenen Adsorbens (13) und der separierten Stäube aus der Absauganlage (9).

2. Verfahren nach Anspruch 1, **dadurch gekennzeichnet, dass**
das Adsorbens (5) Kieselsäure (Siliciumdioxid), organisch modifizierte Kieselsäure, Zinkoxid, Talkum, Silica, Aktivkohle, Hochofenkoks und/oder unterschiedliche Rußtypen umfasst.

3. Verfahren nach einem der vorhergehenden Ansprüche,
**dadurch gekennzeichnet, dass**
das Adsorbens (5) in einem pulverförmigen, geperlten und/oder granulierten Zustand in der Filteranlage angeordnet wird.

4. Verfahren nach einem der vorhergehenden Ansprüche,
**dadurch gekennzeichnet, dass**
die Filteranlage einen Mehrkammerfilter (30) mit einzelnen Filtertaschen und/oder Filterplatten und/oder Filterlamellen und/oder Faltenfilter und/oder Schlauchfilter aufweist.

5. Verfahren nach einem der vorhergehenden Ansprüche,
**dadurch gekennzeichnet, dass**
die Emissionen an einem Mischaggregat, während des Weiterverarbeitungsprozesses und/oder an einem Vulkanisationsapparat abgesaugt werden.

## Claims

1. Process for absorption of odour emissions in the production of rubber mixtures with a mixer comprising the steps of:
a) extraction of odour emissions, aerosols and dusts (2) with an extractor apparatus (9), wherein the odour emissions, aerosols and dusts (2) are generated during rubber processing,
b) adsorption of the odour emissions with a filtering apparatus (4) arranged in the extractor (9),
wherein the filtering apparatus (4) comprises an adsorbent (5) for odour emissions and/or aerosols and a filtering means (12) for the separation of dusts and the retaining of the adsorbent, wherein the adsorbent (5) removes the odour emissions and/or aerosols from the exhaust air with high efficiency and is employable for mixture production,
wherein the filtering apparatus (4) is a single-stage apparatus,
wherein the adsorbent (5) is supplied to the extractor apparatus (9) together with the dusts before step b) and the laden adsorbent (13) is separated from the exhaust air with the dusts at the filtering means (12) in the form of a dust separator,
wherein the adsorbent (5) and the dusts are blown into the dust separator in a quantity ratio of 100:1 to 1:100,
c) discharging of clean, odour-free air (7) from the extractor apparatus (9) with a conveying means,
d) discharging the laden adsorbent (13) and the separated dusts from the extractor apparatus (9).

2. Process according to Claim 1, **characterized in that** the adsorbent (5) comprises silicic acid (silicon dioxide), organically modified silicic acid, zinc oxide, talc, silica, activated carbon, blast furnace coke and/or various types of carbon black.

3. Process according to any of the preceding claims, **characterized in that** the adsorbent (5) is arranged in the filtering apparatus in a pulverulent, pelletized and/or granulated state.

4. Process according to any of the preceding claims, **characterized in that** the filtering apparatus comprises a multi-chamber filter (30) having individual filter sacks and/or filter plates and/or lamellar filters and/or pleated filters and/or bag filters.

5. Process according to any of the preceding claims, **characterized in that** the emissions are extracted from a mixing apparatus during further processing and/or from a vulcanization apparatus.

## Revendications

1. Procédé d'adsorption d'émissions d'odeurs lors de la fabrication de mélanges de caoutchouc avec un mélangeur, comprenant les étapes suivantes :
a) l'aspiration d'émissions d'odeurs, d'aérosols et de poussières (2) avec une unité d'aspiration (9), les émissions d'odeurs, les aérosols et les poussières (2) se formant lors de l'usinage de caoutchouc,
b) l'adsorption des émissions d'odeurs avec une unité de filtration (4) agencée dans l'unité d'aspiration (9),
l'unité de filtration (4) comprenant un adsorbant (5) pour les émissions d'odeurs et/ou les aérosols et un moyen de filtration (12) pour la séparation des poussières et la rétention de l'adsorbant,
l'adsorbant (5) éliminant de manière hautement efficace les émissions d'odeurs et/ou les aérosols de l'air d'échappement, et pouvant être utilisé pour la fabrication du mélange,
l'unité de filtration (4) étant configurée à un niveau, l'adsorbant (5) étant introduit avant l'étape b) conjointement avec les poussières dans l'unité d'aspiration (9) et l'adsorbant chargé (13) étant séparé de l'air d'échappement avec les poussières au niveau du moyen de filtration (12) sous la forme d'un séparateur de poussières,
l'adsorbant (5) et les poussières étant injectés dans le séparateur de poussières en un rapport de quantité de 100 sur 1 à 1 sur 100,
c) le déchargement d'un air plus pur, sans odeur (7) avec un moyen de transport de l'unité d'aspiration (9),
d) le déchargement de l'adsorbant chargé (13) et des poussières séparées de l'unité d'aspiration (9).

2. Procédé selon la revendication 1, **caractérisé en ce que** l'adsorbant (5) comprend de l'acide silicique (dioxyde de silicium), de l'acide silicique modifié organiquement, de l'oxyde de zinc, du talc, de la silice, du charbon actif, du coke de haut fourneau et/ou différents types de noir de carbone.

3. Procédé selon l'une quelconque des revendications précédentes, **caractérisé en ce que** l'adsorbant (5) est agencé dans l'unité de filtration à un état pulvérulent, perlé et/ou granulé.

4. Procédé selon l'une quelconque des revendications précédentes, **caractérisé en ce que** l'unité de filtration comprend un filtre à plusieurs chambres (30) comprenant des poches de filtration et/ou des plaques de filtration et/ou des lamelles de filtration et/ou des filtres plissés et/ou des filtres à manches individuels.

5. Procédé selon l'une quelconque des revendications précédentes, **caractérisé en ce que** les émissions sont aspirées au niveau d'un appareil de mélange, pendant le processus de transformation et/ou au niveau d'un appareil de vulcanisation.
